# EUROPEAN PATENT APPLICATION

(11) **EP 2 515 081 A2**
(43) Date of publication of application: **24.10.2012**
(21) Application number: 12162957.0
(22) Date of filing: 03.04.2012
(51) Int. Cl.: G01C 21/36, H04N 1/21, H04N 1/00, G06F 17/30

(54) **Information Providing Apparatus, Information Providing Method, and Program**

(30) Priority: 21.04.2011 JP 2011094940
(71) Applicant: Sony Corporation, Tokyo 108-0075 (JP)
(72) Inventor: Nomura, Kazunori, Minato-ku, Tokyo 108-0075 (JP); Inoue, Satoru, Minato-ku, Tokyo 108-0075 (JP); Kondo, Shigeharu, Minato-ku, Tokyo 108-0075 (JP); Nagata, Satoshi, Minato-ku, Tokyo 108-0075 (JP)
(74) Representative: Davies, Simon Robert

(57) **Abstract**

There is provided an information providing apparatus including a course information acquiring unit that acquires course information to which position information indicating positions of a predetermined plurality of spots and order information indicating an order of each spot are set, a photo acquiring unit that acquires photos taken in a predetermined area including the spots, a map making unit that makes a map where marks indicating the plurality of spots are displayed on the basis of the position information set to the course information, and a display control unit that sequentially sets the plurality of spots as display objects according to the order information set to the course information and causes a display unit to display the photos taken in the spots set as the display objects and a map of a predetermined range including the marks indicating the spots.

## Description

The present disclosure relates to an information providing apparatus, an information providing method, and a program, including to an information providing apparatus, an information providing method and a program that are configured to use effectively photos to which position information is added.

Conventionally, a digital still camera that has a global positioning system (GPS) function can take photos, acquire position information of places at which the photos are taken using the GPS function, add the position information to the photos, and record the photos.

For example, Japanese Laid-Open Patent Publication No. 2008-277959 discloses an imaging device that acquires position/direction information at the time of imaging a moving image while imaging the moving image and records the position/direction information together with map image data provided from a map data providing server.

As such, the photos to which the position information is added are recorded so that a process for displaying the photos on a display device and displaying a map where marks indicating the positions at which the photos were taken are displayed on the display device can be easily executed.

However, there has been a need to provide the photos and the positions at which the photos were taken to a user and provide information having high value to the user effectively using the photos to which the position information is added.

The approach described herein reflects the above circumstances and helps photos to which position information is added to be used effectively.

Various respective aspects and features of the invention are defined in the appended claims. Combinations of features from the dependent claims may be combined with features of the independent claims as appropriate and not merely as explicitly set out in the claims.

According to an embodiment of the present invention, there is provided an information providing apparatus which includes a course information acquiring unit that acquires course information to which position information indicating positions of a predetermined plurality of spots and order information indicating an order of each of the spots are set; a photo acquiring unit that acquires photos taken in a predetermined area including the spots; a map making unit that makes a map where marks indicating the plurality of spots are displayed on the basis of the position information set to the course information; and a display control unit that sequentially sets the plurality of spots as display objects according to the order information set to the course information and causes a display unit to display the photos taken in the spots set as the display objects and a map of a predetermined range including the marks indicating the spots.

According to an embodiment of the present invention, there is provided an information providing method and a computer program to realize the method which includes acquiring course information to which position information indicating positions of a predetermined plurality of spots and order information indicating an order of each of the spots are set; acquiring photos taken in a predetermined area including the spots; making a map where marks indicating the plurality of spots are displayed on the basis of the position information set to the course information; and sequentially setting the plurality of spots as display objects according to the order information set to the course information and causing a display unit to display the photos taken in the spots set as the display objects and a map of a predetermined range including the marks indicating the spots.

According to an embodiment of the present invention, there is provided a series of processes which includes acquiring course information to which position information indicating positions of a predetermined plurality of spots and order information indicating an order of each of the spots are set; acquiring photos taken in a predetermined area including the spots; making a map where marks indicating the plurality of spots are displayed on the basis of the position information set to the course information; and sequentially setting the plurality of spots as display objects according to the order information set to the course information and causing a display unit to display the photos taken in the spots set as the display objects and a map of a predetermined range including the marks indicating the spots.

According to the embodiments described above, photos to which position information is added can be used effectively.

Embodiments of the invention will now be described with reference to the accompanying drawings, throughout which like parts are referred to by like references, and in which:
FIG. 1 is a block diagram showing a configuration example of an information providing apparatus in accordance with one embodiment of the present invention;
FIG. 2 is a diagram showing a process that is executed by a slide show based on a tour course to which a plurality of spots are set;
FIG. 3 is a diagram showing a display example of a slide show screen;
FIG. 4 is a diagram showing a display example of a screen to select a tour course;
FIG. 5 is a diagram showing a display example of a screen to select an album;
FIG. 6 is a flowchart showing a process for executing a slide show based on a tour course to which a plurality of spots are set;
FIG. 7 is a flowchart showing a process of making a tour course; and
FIG. 8 is a flowchart showing a slide show process.

Hereinafter, preferred embodiments of the present invention will be described in detail with reference to the appended drawings. Note that, in this specification and the appended drawings, structural elements that have substantially the same function and structure are denoted with the same reference numerals, and repeated explanation of these structural elements is omitted.

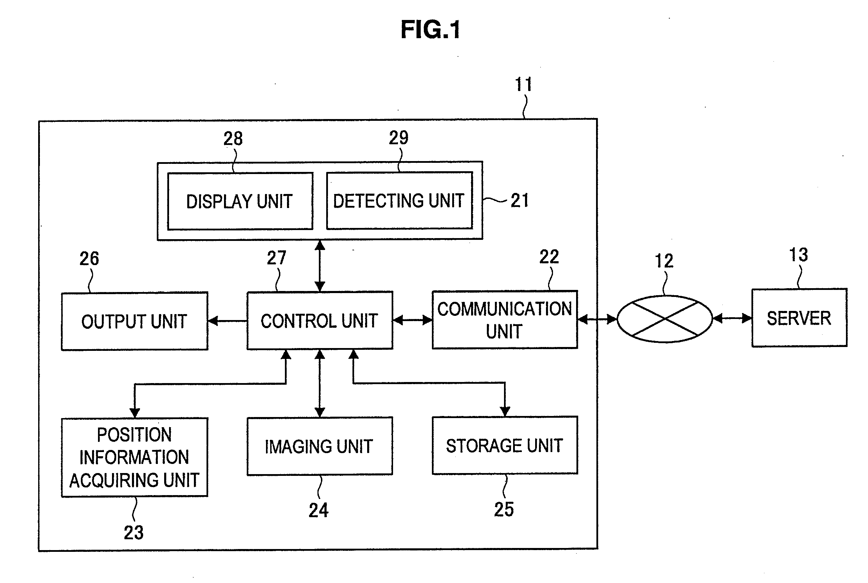

FIG. 1 is a block diagram showing a configuration example of an embodiment of an information providing apparatus.

An information providing apparatus 11 shown in FIG. 1 is a so-called smartphone. The information providing apparatus 11 performs communication with a server 13 providing various information through a network 12 and provides information according to an operation from a user.

The information providing apparatus 11 includes a touch panel 21, a communication unit 22, a position information acquiring unit 23, an imaging unit 24, a storage device 25, an output unit 26, and a control unit 27.

The touch panel 21 includes a display unit 28 that has a liquid crystal panel or an organic electro luminescence (EL) panel and a detecting unit 29 that has a detection function using a resistive system, a capacitive system, or an infrared system.

The display unit 28 displays photos that are provided from the server 13 or a graphical user interface (GUI) that is used at the time of an operation from the user, according to control of the control unit 27. The detecting unit 29 detects a position of a surface of the display unit 29 which the user has touched (contacted), specifies the touch position, and supplies coordinate information indicating the touch position to the control unit 27.

The communication unit 22 performs data communication according to a wireless communication standard used in a mobile phone and requests the server 13 to transmit information through the network 12 such as the Internet. The server 13 manages a database (DB) in which various information such as photos, music, and maps are digitized and registered, searches for the information requested from the communication unit 22 from the DB and transmits the information. Then, the communication unit 22 receives the information transmitted from the server 13 and supplies the information to the control unit 27.

The position information acquiring unit 23 acquires information to specify a current position of the information providing apparatus 11, using a GPS or a wireless local area network (LAN). For example, the position information acquiring unit 23 specifies the current position of the information providing apparatus 11 using electric waves of the wireless LAN transmitted from at least three base stations disposed at different places and a technique of trilateration based on position information of the base stations.

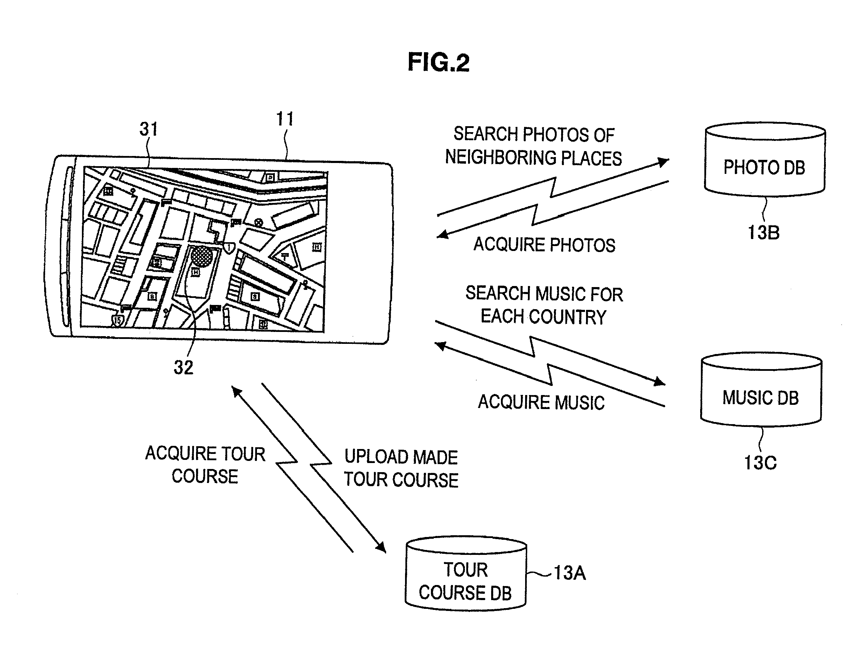

The imaging unit 24 includes a charge coupled device (CCD) or a complementary metal oxide semiconductor (CMOS) sensor and takes a photo according to a shutter operation from the user. If the imaging unit 24 takes a photo, the control unit 27 acquires position information of a place at which the photo is taken from the position information acquiring unit 23, adds the position information to the taken photo, and storages the photo in the storage unit 25. In the information providing apparatus 11, the communication unit 22 can transmit the photos to which the position information is added to the server 13 through the network 12 and register the photos in the DB of the server 13 (for example, photo DB of FIG. 2).

The storage unit 25 has a nonvolatile semiconductor memory where contents are held even when power supply is stopped, for example, a flash memory (for example, an electronically erasable and programmable read only memory (EEPROM)). The storage unit 25 stores a program (application software) executed by the control unit 27 and the digitized photos, music, and maps.

The output unit 26 has a speaker or a music reproducing unit, and reproduces the music stored in the storage unit 25 and outputs the music according to control of the control unit 27.

The control unit 27 includes a central processing unit (CPU), a read only memory (ROM), and a random access memory (RAM), and loads a program stored in the ROM or the storage unit 25 to the RAM, executes the program, and controls the individual units of the information providing apparatus 11. The program that is executed by the CPU can be stored previously in the ROM or the storage unit 25. In addition, the program can be downloaded to the storage unit 25 and can be updated.

For example, the control unit 27 acquires course (path) information of a tour course to which predetermined spots, for example, a plurality of spots having tourist attractions, commercial facilities, and public facilities, are set. In addition, the control unit 27 causes the display unit 28 to display the photos according to order of the spots set to the tour course, executes a program that reproduces music suitable for the spots and executes a slide show output by the output unit 26.

A process of executing the slide show based on the tour course to which the plurality of spots are set will be described with reference to FIG. 2.

As shown in FIG. 2, the information providing apparatus 11 performs communication with a server 13A managing a tour course DB, a server 13B managing a photo DB, and a server 13C managing a music DB.

For example, if the user operates the information providing apparatus 11 to select the tour course, in the information providing apparatus 11, the communication unit 22 of FIG. 1 performs communication with the server 13A, acquires course information of the tour course selected by the user, and stores the course information in the storage unit 25. In the tour course DB of the server 13A, course information of a plurality of tour courses is digitized and registered. The course information includes position information (latitude and longitude) indicating a position of each spot, area information indicating an area (for example, a name of a country or a locality) to which each spot belongs, and order information indicating order in which to visit the spots, which are set to each of the plurality of spots of the tour course.

Then, in the information providing apparatus 11, the control unit 27 transmits the position information of each spot to the server 13B through the communication unit 22 and requests the server 13B to provide photos of the predetermined number (for example, 16 photos) taken in neighboring places of each spot.

In the photo DB of the server 13B, the photos to which the position information of the positions at which the photos are taken is added are digitized and registered. The server 13B searches photos to which position information of neighboring places of each spot (in a predetermined region including a position of each spot, for example, a region having a diameter of 100 m or less) is added, from the photo DB, on the basis of the position information of each spot transmitted from the information providing apparatus 11.

In this case, when the photos of the predetermined number or more requested from the information providing apparatus 11 are registered in the photo DB, the server 13B selects the photos of the predetermined number suitable for display in the information providing apparatus 11 from the photos. For example, the slide show that is executed by the information providing apparatus 11 is used to previously recognize an atmosphere of the destination. The server 13B selects photos in which general scenery of each spot or marks characterizing scenes of each spot are pictured. In addition, the server 13B recognizes a size of the display unit 28 of the information providing apparatus 11 and selects photos having a size matching a size of the display unit 28.

The server 13B transmits photos of the predetermined number taken in neighboring places of each spot to the information providing apparatus 11 for each of a plurality of transmission requested spots. Thereby, in the information providing apparatus 11, the control unit 27 acquires the plurality of photos received by the communication unit 22 and stores the photos in the storage unit 25.

The control unit 27 transmits area information of each spot to the server 13C through the communication unit 22 and requests the server 13C to search music associated with an area of each spot. For example, when the individual spots belong to a plurality of countries, the control unit 27 requests the server 13C to provide music for each country. When the plurality of spots belong to the same area, the control unit 27 transmits the same area information with respect to the spots.

In the music DB of the server 13C, the music associated with the area information (for example, a national anthem associated with each country name) is digitized and registered. The server 13C searches the music associated with the area of each spot from the music DB on the basis of the area information of each spot transmitted from the information providing apparatus 11, and transmits a plurality of music obtained as the search result to the information providing apparatus 11. In this case, when the number of areas to which the spots set to the tour course belong is only one, the server 13C transmits music of the predetermined number (for example, three) associated with the area.

In the information providing apparatus 11, the control unit 27 acquires the plurality of music received by the communication unit 22 and stores the music in the storage unit 25.

As such, the information providing apparatus 11 acquires the photos of the predetermined number taken in the neighboring places of each spot for each spot set to the tour course, and acquires the plurality of music associated with the area of each spot. The control unit 27 sequentially causes the display unit 28 to display the photo of each spot according to the order information included in the course information of the tour course, and outputs the music suitable for each spot from the output unit 26.

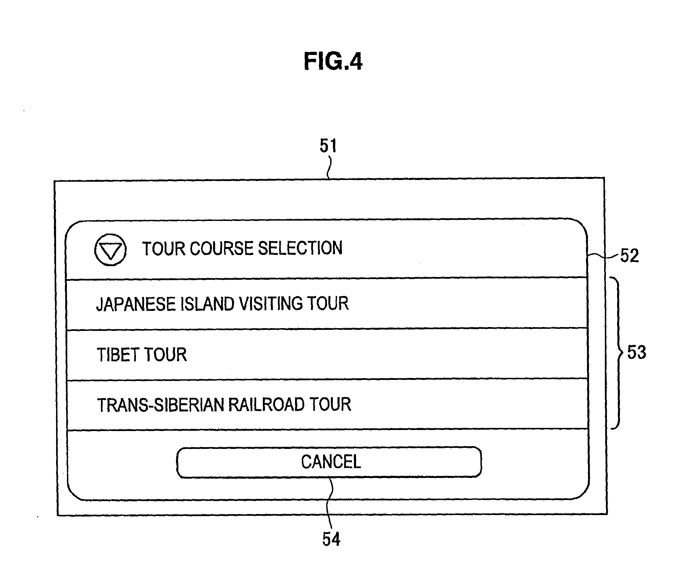

The information providing apparatus 11 displays a screen (screen 51 of FIG. 4) to display a list of names of a plurality of tour courses registered in the tour course DB of the server 13A on the display unit 28 and allows the user to select the tour course to execute the slide show. In addition, the information providing apparatus 11 allows the user to select the tour course using the photos registered in the photo DB of the server 13B.

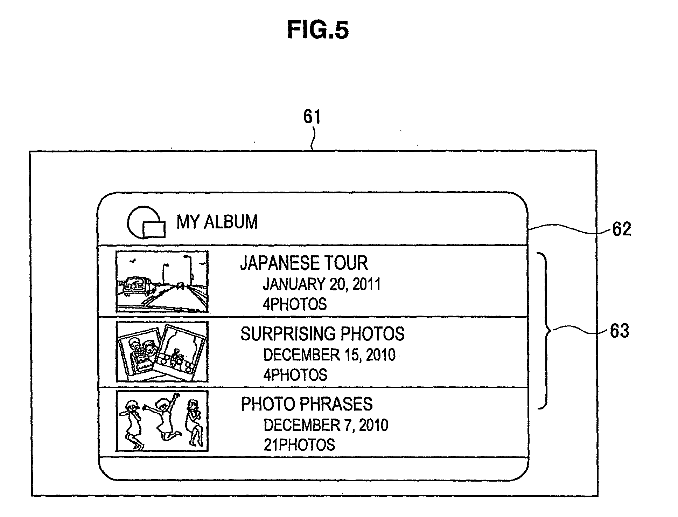

In the photo DB of the server 13B, the photos can be registered for each arbitrary classification. For example, when the user travels, a plurality of photos that are taken at the destination can be registered in the photo DB as one classification. Hereinafter, a collection of photos classified in the above-described manner is called an album. The server 13B transmits names of a plurality of albums registered in the photo DB to the information providing apparatus 11. The information providing apparatus 11 displays a screen (screen 61 of FIG. 5) to display a list of the names of the albums on the display unit 28 and makes a tour course to execute the slide show using an album selected by the user.

In the information providing apparatus 11, the tour course can be made on the basis of the spot designated by the user and the slide show based on the made tour course can be executed.

For example, the information providing apparatus 11 acquires a map of a place according to an operation from the user from a server (not shown in the drawings) managing a map database where maps are digitized and registered, and displays the map on the display unit 28. The user touches a surface of the display unit 28 and performs an operation to designate an arbitrary spot on the map displayed on the display unit 28 and the control unit 27 specifies the spot on the basis of the touch position detected by the detecting unit 29.

For example, in FIG. 2, a screen 31 where the map to designate the spot is displayed when the tour course is made is displayed on the information providing apparatus 11. If the user touches an arbitrary spot on the map displayed on the screen 31 for a constant time, the control unit 27 specifies the spot and a mark 32 indicating the spot is displayed on the screen 31.

If the user designates a plurality of spots and performs an operation to instruct that a tour course be made, the control unit 27 generates course information that includes position information of the spot designated by the user and order information according to an order of the spots designated by the user. The control unit 27 refers to information regarding the map registered in the map database on the basis of the position information of each spot, and acquires area information of each spot.

The information providing apparatus 11 can acquire the photos and the music from the servers 13B and 13C according to the course information of the tour course made in the above-described manner and perform the slide show.

The information providing apparatus 11 can upload the course information of the tour course made by the user to the server 13A, that is, transmit the course information to the server 13A by the communication unit 22 and register the course information in the tour course DB of the server 13A. Thereby, the tour course that is made by the user is shared with other users (users having other information providing apparatuses) through the server 13A.

For example, in the tour course DB of the server 13A, in addition to the tour course made by the user of the information providing apparatus 11, tour courses made by friends or family of the user and tour courses made by a number of unspecified users are registered. In addition, the tour courses can be shared between the users of the information providing apparatuses 11 that execute the application software executing the slide show, on the basis of the tour courses to which the plurality of spots are set. Likewise, the albums that are registered in the photo DB of the server 13B can be shared between the users having the information providing apparatuses 11.

As such, in the information providing apparatus 11, the slide show is executed according to any one of the tour course selected by the user, the tour course based on the album selected by the user, and the tour course made by the user.

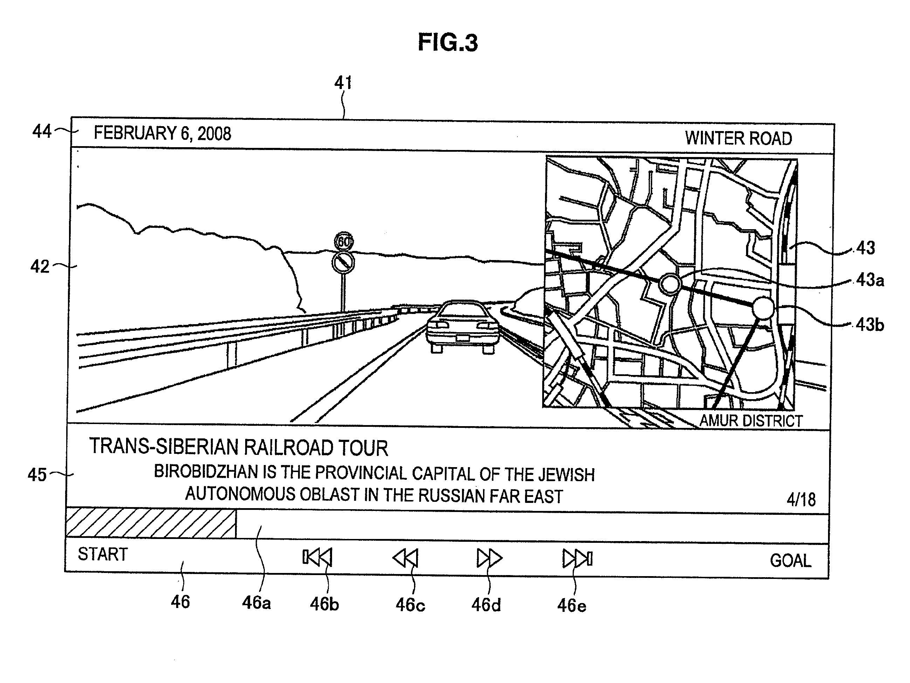

Next, FIG. 3 is a diagram showing a display example of a slide show screen.

An entire surface of a slide show screen 41 becomes a photo display unit 42 and a map display unit 43, a title display unit 44, a text information display unit 45, and a GUI display unit 46 are displayed on the slide show screen 41 to overlap photos displayed on the photo display unit 42. The title display unit 44, the text information display unit 45, and the GUI display unit 46, are displayed translucently such that the photos displayed on the photo display unit 42 can be recognized.

On the photo display unit 42, the spots become display objects in order according to the order information included in the course information of the tour course selected by the user and photos of the neighboring places of the spots are sequentially displayed.

On the map display unit 43, a map of a predetermined range (for example, an arbitrarily set range, such as 1 km in any direction) based on the spots of the display objects of which the photos are displayed on the photo display unit 42 is displayed. On the map display unit 43, a mark indicating each spot that is set to the tour course and a line that couples the spots in order according to the tour course are displayed. In the display example of FIG. 3, marks 43a and 43b are displayed. The mark 43a shows a spot of a current display object and the mark 43b shows a spot of a next display object.

For example, if all photos of the neighboring places of the spot shown by the mark 43a are displayed on the photo display unit 42 as the slide show progresses, display of photos of the neighboring places of the spot shown by the mark 43b starts and the map display unit 43 updates the map with a map based on the mark 43b. On the lower side of the map display unit 43, a geographical name of the spot that becomes the current display object is displayed. In the display example of FIG. 3, a geographic name "Amur district" is displayed.

On the title display unit 44, a title of the photo that is displayed on the photo display unit 42 and a date when the photo is taken are displayed. In the display example of FIG. 3, a title "Winter Road" is displayed on a right end of the title display unit 44 and a date "February 6, 2008" is displayed on a left end of the title display unit 44.

On the text information display unit 45, various information that can be displayed in sentences is displayed. For example, a name of the tour course that is selected by the user is displayed on the text information display unit 45. In the display example of FIG. 3, a name "Trans-Siberian railroad tour" of the tour course is displayed. On the text information display unit 45, information that is associated with the spot of the photo being displayed on the photo display unit 42 is displayed. In the display example of FIG. 3, information (Birobidzhan is the provincial capital of the Jewish Autonomous Oblast in the Russian Far East) regarding the spot is displayed. The information regarding the spot is displayed by automatically searching information provided on the Internet by the information providing apparatus 11.

On the text information display unit 45, information that shows an order of the spots becoming the display objects is displayed. In the display example of FIG. 3, information "4/18" that shows that a fourth spot among eighteen spots set to the tour course becomes a display object is displayed. The information that is displayed on the text information display unit 45 is not limited to the example shown in the drawings. For example, on the text information display unit 45, an explanation (subtitle) with respect to the tour course or information that shows an order of the photos displayed on the photo display unit 42 among the photos of the predetermined number with respect to the display object spots can be displayed.

On the GUI display unit 46, a plurality of GUI components regarding progress of the slide show are displayed. In the display example of FIG. 3, a progress bar 46a, a skip return button 46b, a return button 46c, a feeding button 46d, and a skip feeding button 46e are displayed.

The progress bar 46a graphically displays a progress situation of the spot becoming the display object and a left end thereof shows a start and a right end thereof shows a goal. The skip return button 46b operates when the spot immediately before the spot becoming the display object is set as the display object and the return button 46c operates when the photo displayed immediately before the photo being displayed on the photo display unit 42 is displayed. The feeding button 46d operates when the photo displayed next to the photo being displayed on the photo display unit 42 is displayed and the skip feeding button 46e operates when the spot next to the spot becoming the display object is set as the display object.

By displaying the slide show screen 41 on the display unit 28 of the information providing apparatus 11, the user can view the scenery of the destination through the photos before the user travels, recognize places where the photos of the scenery are taken, and know information regarding the places. By executing the slide show in the order according to a tour schedule of the user, the user can know the tour schedule more realistically.

Next, FIG. 4 is a diagram showing a display example of a screen to select a tour course.

As shown in FIG. 4, a title display unit 52, a list display unit 53, and a cancel button 54 are displayed on the screen 51.

On the title display unit 52, a title (tour course selection) that shows that a screen is a screen to select the tour course is displayed.

On the list display unit 53, a list of names of a plurality of tour courses that are acquired from the server 13A (refer to FIG. 2) by the information providing apparatus 11 is displayed (provided). In the display example of FIG. 4, names "Japanese island visiting tour," "Tibet tour," and "Trans-Siberian railroad tour" of three tour courses are displayed on the list display unit 53. When the plurality of tour courses are registered in the tour course DB of the server 13A, if the user moves fingers up and down in a state in which the user touches a surface of the touch panel 21, display of the list display unit 53 is scrolled and names of the other tour courses are displayed.

The cancel button 54 operates when the user cancels the tour course selection.

If the screen 51 is displayed on the display unit 28 of the information providing apparatus 11 and the user touches a name of an arbitrary tour course from the display of the list display unit 53, the tour course is selected.

As described above, the information providing apparatus 11 allows the user to select an album used for the slide show from the albums registered in the photo DB of the server 13B and can execute the slide show of the tour course based on the photos included in the album.

Next, FIG. 5 is a diagram showing a display example of a screen to select the album.

As shown in FIG. 5, a title display unit 62 and a list display unit 63 are displayed on the screen 61.

On the title display unit 62, a name of a folder to which the album displayed on the list display unit 63 belongs is displayed to show that a screen is a screen to select the album from the folder. In the display example of FIG. 5, a name "my album" of a folder that shows a folder to which the album registered by the user in the photo DB of the server 13B belongs is displayed on the title display unit 62.

On the list display unit 63, a list of a plurality of albums acquired from the server 13B (refer to FIG. 2) by the information providing apparatus 11 is displayed (provided). In the display example of FIG. 5, names "Japanese tour," "surprising photos," and "photo phrases" of three albums are displayed on the list display unit 63. In addition, a name of an album, thumbnails of photos that are included in the album, a date when the album is made, and the number of photos that are included in the album are displayed. When a plurality of albums are registered in the photo DB of the server 13B, if the user moves the fingers up and down in a state in which the user touches the surface of the touch panel 21, the display of the list display unit 63 is scrolled and names of the other albums are displayed.

If the screen 61 is displayed on the display unit 28 of the information providing apparatus 11 and the user touches a name of an arbitrary album from the display of the list display unit 63, the corresponding album is selected.

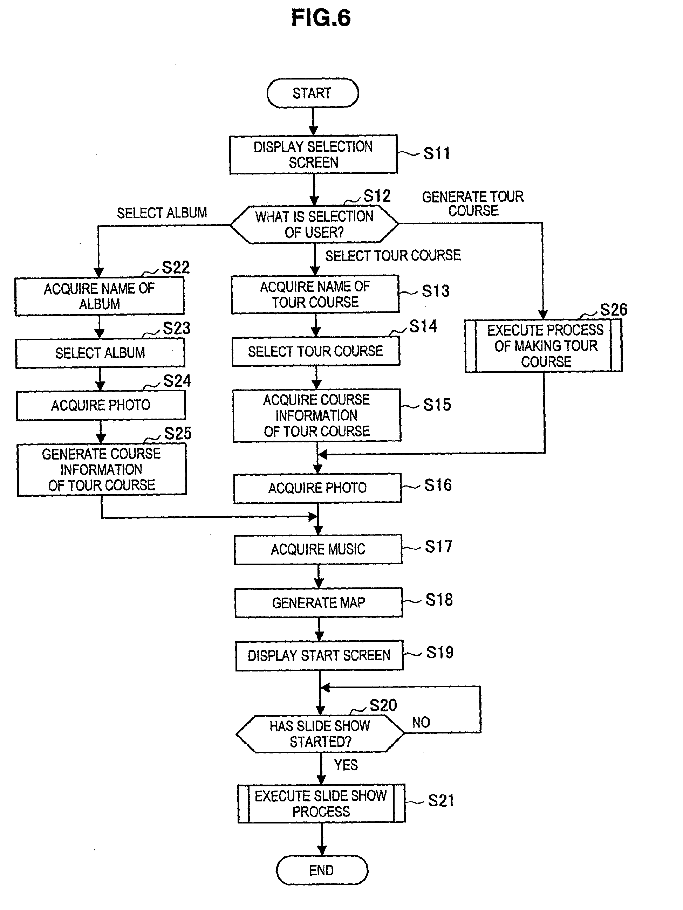

Next, FIG. 6 is a flowchart showing a process for executing a slide show based on a tour course to which a plurality of spots are set by the information providing apparatus 1 of FIG. 1. For example, if the user operates the information providing apparatus 11 to instruct that a program to execute the slide show be executed, the process starts.

In step S11, the control unit 27 causes the display unit 28 of the touch panel 21 to display a selection screen to select a method of acquiring a tour course to execute the slide show and the process proceeds to step S12. On the selection screen, a GUI button that allows the user to select any one of tour course selection, album selection, and tour course generation is displayed.

In step S12, the control unit 27 determines whether the user selects any one of the tour course selection, the album selection, and the tour course generation on the basis of the touch position of the user detected by the detecting unit 29 of the touch panel 21.

In step S12, when the control unit 27 determines that the tour course selection is selected by the user, the process proceeds to step S 13.

In step S13, the control unit 27 performs a control operation such that the communication unit 22 acquires names of the tour courses registered in the tour course DB performing communication with the server 13A of FIG. 2. The communication unit 22 performs communication with the server 13A through the network 12 according to the control from the control unit 27, acquires the names of the tour courses registered in the tour course DB, and supplies the names to the control unit 27.

After the process of step S13, the process proceeds to step S14 and the control unit 27 causes the display unit 28 of the touch panel 21 to display the screen 51 (refer to FIG. 4) to allow the user to select the tour course to execute the slide show from the tour courses acquired in step S13. If the user touches the name of the tour course displayed on the list display unit 53 of the screen 51 for a time longer than the predetermined time, the touch position is detected by the detecting unit 29. The control unit 27 specifies the tour course that is selected by the user and the process proceeds to step S 15.

In step S 15, the control unit 27 performs a control operation such that the communication unit 22 acquires the course information of the tour course selected by the user in step S14. The communication unit 22 performs communication with the server 13A through the network 12 according to the control from the control unit 27, acquires the course information of the tour course selected by the user from the tour course DB, and supplies the course information to the control unit 27. The process proceeds to step S16.

In step S16, the control unit 27 performs a control operation such that the communication unit 22 acquires the photos of the neighboring places of each spot included in the course information acquired in step S15. The communication unit 22 performs communication with the server 13B through the network 12 according to the control from the control unit 27, transmits the position information of each spot to the server 13B, and requests the server 13B to provide the photos of the predetermined number taken in the neighboring places of each spot. According to the request, the server 13B refers to the position information added to the photos registered in the photo DB, searches for the photos to which the position information of the neighboring places of each spot is added, and transmits the photos to the information providing apparatus 11. In the information providing apparatus 11, the communication unit 22 receives the photos from the server 13B and stores the photos in the storage unit 25 through the control unit 27.

In step S17, the control unit 27 performs a control operation such that the communication unit 22 acquires music associated with an area of each spot included in the course information acquired in step 515. The communication unit 22 performs communication with the server 13C through the network 12 according to the control from the control unit 27, transmits area information of each spot to the server 13C, and requests the server 13C to provide the music associated with the area of each spot. According to the request, the server 13C refers to the area information associated with the music registered in the music DB, searches a plurality of music associated with the area of each spot, and transmits the music to the information providing apparatus 11. In the information providing apparatus 11, the communication unit 22 receives the music from the server 13C and stores the music in the storage unit 25 through the control unit 27.

In step S18, the control unit 27 makes a map displayed on the map display unit 43 of FIG. 3 on the basis of the course information acquired in step S15. For example, the control unit 27 acquires a map including all of the spots from a map database managed by a server not shown in the drawings. In addition, the control unit 27 makes a map where a mark indicating each spot is displayed on the acquired map on the basis of the position information of each spot included in the course information, and a line coupling each spot is displayed according to the order information included in the course information.

After the process of step S 18, the process proceeds to step S 19 and the control unit 27 displays a start screen on which a slide show start button to start the slide show is displayed on the display unit 28, and the process proceeds to step S20. On the start screen, an entire range of the map (map where all of the spots are coupled by the line) made in step S18 may be displayed.

In step S20, the control unit 27 determines whether the slide show is starting and maintains the process in a waiting state until it is determined that the slide show is starting. For example, if the detecting unit 29 detects that the user touches the slide show start button of the start screen displayed on the display unit 28 in step S19, the control unit 27 determines that the slide show is starting and the process proceeds to step S21.

In step S21, the control unit 27 displays the photos or the maps by the slide show screen 41 described with reference to FIG. 3 and executes the slide show process to reproduce the music. After the slide show process, the process ends.

Meanwhile, in step S12, when the control unit 27 determines that the album selection is selected by the user, the process proceeds to step S22.

In step S22, the control unit 27 performs a control operation such that the communication unit 22 acquires the names of the albums registered in the photo DB performing communication with the server 13B of FIG. 2. The communication unit 22 performs communication with the server 13B through the network 12, according to the control from the control unit 27, acquires the names of the albums registered in the photo DB, and supplies the names to the control unit 27.

After the process of step S22, the process proceeds to step S23 and the control unit 27 causes the display unit 28 of the touch panel 21 to display the screen 61 (refer to FIG. 5) to allow the user to select the album used for the tour course to execute the slide show from the albums acquired in step S22. If the user touches the name of the album displayed on the list display unit 63 of the screen 61 for a time longer than the predetermined time, the touch position is detected by the detecting unit 29. The control unit 27 specifies the album that is selected by the user and the process proceeds to step S24.

In step S24, the control unit 27 performs a control operation such that the communication unit 22 performs communication with the server 13B of FIG. 2 and acquires the photos included in the album selected by the user in step S23. The communication unit 22 performs communication with the server 13B through the network 12 according to the control from the control unit 27, and requests the server 13B to transmit the photos included in the album selected by the user. According to the request, if the photos are transmitted from the server 13B, the communication unit 22 receives the photos and stores the photos in the storage unit 25 through the control unit 27, and the process proceeds to step S25 .

In step S25, the control unit 27 generates the course information of the tour course using the album selected by the user in step S23. That is, the control unit 27 specifies a place at which one or more photos were taken in a constant range as one spot on the basis of the position information added to the photos acquired in step S24. In addition, the control unit 27 sets any spot in the constant range as the spot and generates position information of the spot. For example, when there are tourist attractions in the constant range in which the plurality of photos are taken, the control unit 27 sets the tourist attractions as the spots.

The control unit 27 refers to the map database managed by a server not shown in the drawings through the network 12, specifies an area to which the set spots belong, and generates area information of each spot. In addition, the control unit 27 generates order information indicating an order of the spots on the basis of time information (information indicating a time when the photos are taken) added to the photos of the set spots.

As such, the control unit 27 generates the course information that includes the position information, the area information, and the order information. After the process of step S25, the process proceeds to step S17. Hereinafter, the above-described process is executed on the basis of the tour course made in step S25.

Meanwhile, in step S12, when the control unit 27 determines that the tour course generation is selected by the user, the process proceeds to step S26 and a process of making a tour course is executed. After the tour course is made in the process of making the tour course, the process proceeds to step S16. Hereinafter, the above-described process is executed on the basis of the tour course made in the process of making the tour course.

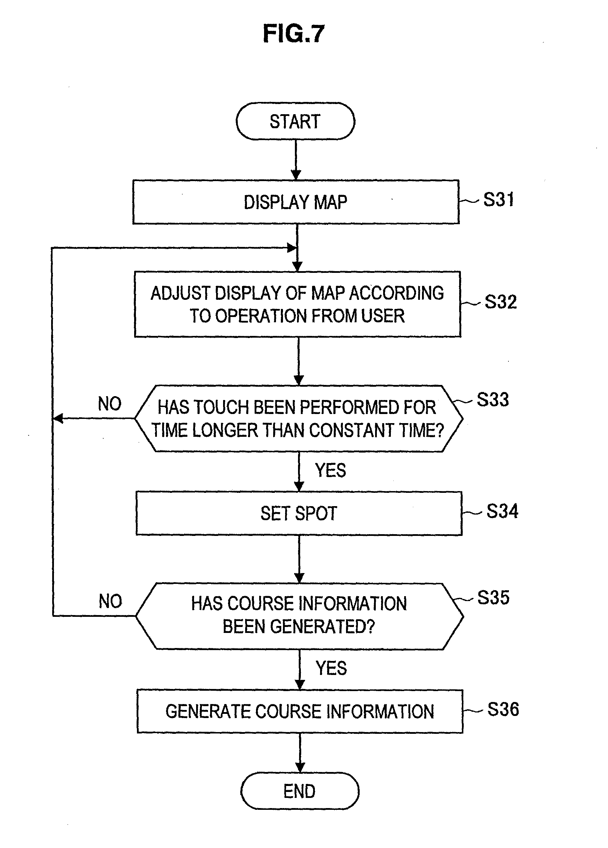

Next, FIG. 7 is a flowchart showing the process of making the tour course in step S26 of FIG. 6.

In step S31, the control unit 27 causes the display unit 28 to display a map of a broad area on the basis of the map provided from the map database managed by a server not shown in the drawings through the network 12, and the process proceeds to step S32.

In step S32, the control unit 27 adjusts the display of the map displayed on the display unit 28 according to an operation from the user, and the process proceeds to step S33. For example, if the user inputs a geographical name to perform an operation to instruct that a search be performed, the control unit 27 causes the display unit 28 to display a detailed map made on the basis of a spot obtained as the search result. If the user performs an operation of moving the fingers up and down and right and left in a state in which the user touches the surface of the touch panel 21, the control unit 27 moves the map displayed on the display unit 28 up and down and right and left according to the operation.

If the user performs an operation to increase or decrease an interval of the two fingers in a state in which the user touches the surface of the touch panel 21 with the two fingers, the control unit 27 enlarges or reduces the map displayed on the display unit 28, according to the operation. When the user does not perform an operation to adjust the display of the map, step S32 is skipped and the process proceeds to step S33.

In step S33, the control unit 27 determines whether the user touches the touch panel for a time longer than the constant time on the basis of an output from the detecting unit 29. For example, in the information providing apparatus 11, a constant time that is necessary for allowing the user to designate the spot on the map is previously set. When coordinate information indicating the touch position supplied from the detecting unit 29 does not change for the constant time or more (or when the change amount is within a predetermined change amount), the control unit 27 determines that the user touches the touch panel for a time longer than the constant time.

In step S33, when the control unit 27 determines that the user does not touch the touch panel for a time longer than the constant time, the process returns to step S32. Hereinafter, the same process is repeated.

Meanwhile, in step S33, when the control unit 27 determines that the user touches the touch panel for a time longer than the constant time; the process proceeds to step S34. In step S34, the control unit 27 sets the spot on the map touched by the user for a time longer than the constant time and generates the position information of the spot. The control unit 27 counts the order of the spot designated by the user.

After the process of step S34, the process proceeds to step S35 and the control unit 27 determines whether the course information is generated. For example, if two or more spots are generated by the user, the GUI button to instruct that the course information be generated is displayed on the screen. If the user touches the GUI button, the control unit 27 determines that the course information is generated.

In step S35, when the control unit 27 determines that the course information is not generated, the process returns to step S32. Hereinafter, the same process is repeated.

Meanwhile, in step S35, when the control unit 27 determines that the course information is generated, the process proceeds to step S36. In step S36, the control unit 27 refers to the map database managed by a server not shown in the drawings on the basis of the position information of each spot set in step S34, specifies an area to which the set spot belongs, and generates area information of each spot. In addition, the control unit 27 generates the course information that includes the position information and the area information of each spot and the order information based on the order counted whenever each spot is designated.

After the process of step S36, the process of making the tour course ends.

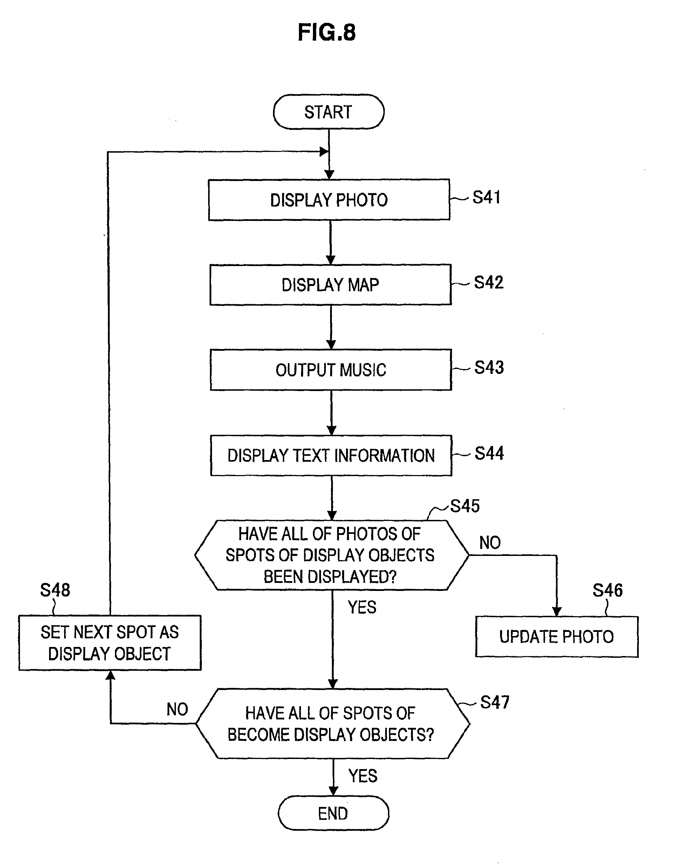

Next, FIG. 8 is a flowchart showing the slide show process in step S21 of FIG. 6.

In step S41, the control unit 27 causes the photo display unit 42 of the slide show screen 41 to display one photo of the spot becoming the display object according to the order information included in the course information. In addition, the control unit 27 displays a title or a date on which the photo displayed on the photo display unit 42 was taken on the title display unit 44 of the slide show screen 41. For example, in step S41, the control unit 27 sets the spot first set in the order information as the display object and displays the first photo among the photos of the predetermined number taken in the neighboring places of the spot.

After the process of step S41, the process proceeds to step S42, the control unit 27 causes the map display unit 43 of the slide show screen 41 to display the map of the predetermined range including the spots of the display objects among the maps made in step S18 of FIG. 6, and the process proceeds to step S43.

In step S43, the control unit 27 performs a control operation such that the output unit 26 reproduces the music associated with the spot of the display object among the music acquired in step S17 of FIG. 6. The music is output from the output unit 26 and the process proceeds to step S44.

In step S44, the control unit 27 displays the name of the tour course on the text information display unit 45 of the slide show screen 41. In addition, the control unit 27 appropriately acquires the information associated with the spot of the display object on the Internet through the communication unit 22 and displays the information on the text information display unit 45.

After the process of step S44, the process proceeds to step S45 and the control unit 27 determines whether all of the photos of the spot becoming the display object have been displayed. For example, when all of the photos of the predetermined number acquired in step S16 with respect to the spot becoming the display object have been displayed on the photo display unit 42, the control unit 27 determines that all of the photos of the spot have been displayed.

In step S45, when it is determined that all of the photos of the spot becoming the display object have not been displayed, the process proceeds to step S46 and the control unit 27 updates the photos that are displayed on the photo display unit 42. That is, the control unit 27 causes the photo display unit 42 to display the non-displayed photos among the photos of the predetermined number acquired in step S16 with respect to the spot becoming the display object. After the process of step S46, the process returns to step S45. Hereinafter, the same process is repeated.

Meanwhile, in step S45, when the control unit 27 determines that all of the photos of the spot becoming the display object have been displayed, the process proceeds to step S47 and the control unit 27 determines whether all of the spots set to the tour course have become the display objects.

In step S47, when the control unit 27 determines that all of the spots set to the tour course do have not become the display objects, the process proceeds to step S48.

In step S48, the control unit 27 sets a spot becoming a next display spot according to the order information of the course information as a new display object and the process returns to step S41. Hereinafter, the same process is repeated on the basis of the spot becoming the new display object. The control unit 27 updates the information indicating the order of the spots in the text information display unit 45 or the display of the progress bar 46a of the GUI display unit 46.

Meanwhile, in step S47, when the control unit 27 determines that all of the spots set to the tour course have become the display objects, the control unit 27 terminates the slide show process.

As described above, in the information providing apparatus 11, the slide show based on the tour course can be executed using the photos to which the position information is added, the photos can be sequentially displayed, and the position information of the spots can be displayed on the map. Thereby, as compared with the case in which the photos and the places at which the photos were taken are simply displayed, information that is continuously displayed along the tour course and has high value can be provided to the user.

For example, before the user participates in a certain tour, the user selects a tour course registered with a name of the tour and executes the slide show so that the user can previously know an atmosphere of the tour. After the user has traveled, the user registers the album of the photos taken at the destination in the photo DB of the server 13B so that friends of the user can select the album, execute the slide show, and share travel experiences of the user.

In the information providing apparatus 11, when the photos of the spot of the display object are displayed, the user can enjoy the slide show as compared with the case in which the photos are simply displayed, because the music of the spot is reproduced. The user can deepen his or her knowledge about the spot using the information associated with the spot displayed on the text information display unit 45. As such, the information providing apparatus 11 can provide composite and multifaceted information to the user, using the photos, the maps, the music, and the text information.

In the information providing apparatus 11, the user can virtually enjoy an original tour course not included in the existing tour courses, because the user can generate the tour course. In this case, when the tour course is made, the user may only input geographic names of a plurality of tourist attractions to the information providing device 11 so that the information input apparatus 11 acquires position information, area information, and order information (order of close tourist attractions) from the geographical names. The area information may not be included in the tour information so that the information providing apparatus 11 determines the area of the spot from the position information and acquires the music associated with the spot.

In this embodiment, the slide show of the photos has been described. However, moving images that are imaged in the neighboring places of each spot may be displayed on the photo display unit 42.

In addition to acquiring the photos, the maps, and the music from the server 13 through the network 12, all information necessary for executing the slide show may be stored in the storage unit 25 and the processes may be executed by only the information providing apparatus 11. In contrast, all of the processes (or a part of the processes) may be executed by a server not shown in the drawings, the result of the processes may be received by the information providing apparatus 11, the information providing apparatus 11 may display the result on the display unit 28, and the result may be output from the output unit 26. That is, the program to execute the slide show according to the tour course to which the plurality of spots are set may be partially or entirely provided to the information providing apparatus 11 through the network 12.

The user can make the album using the plurality of photos that are taken by the imaging unit 24 of the information providing apparatus 11 and include the position information acquired by the position information acquiring unit 23, upload the album to the server 13B, and register the album in the photo DB. Thereby, the user can share the tour course using the photos of the album with the other users.

The touch panel 21 can detect that the user approximates the fingers to the touch panel 21 (approximates the fingers to the touch panel 21 such that the user does not contact the surface of the touch panel 21) and detecting that the fingers of the user approximate to the touch panel 21 is included in the detection of the touch with respect to the touch panel 21. The touch panel 21 can detect that the user touches the touch panel with objects other than fingers, for example, touches the touch panel with a stylus (stylus input).

The individual processes that are described with reference to the flowcharts do not need to be executed in temporal sequence according to the order described in the flowcharts and may be executed in parallel or individually (for example, parallel processing or object processing). One CPU may process the program and a plurality of CPUs may perform distributed processing on the program.

It should be understood by those skilled in the art that various modifications, combinations, subcombinations and alterations may occur depending on design requirements and other factors insofar as they are within the scope of the appended claims or the equivalents thereof.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

## Claims

1. An information providing apparatus comprising:
a course information acquiring unit that acquires course information to which position information indicating positions of a predetermined plurality of spots and order information indicating an order of each of the spots are set;
a photo acquiring unit that acquires photos taken in a predetermined area including the spots;
a map making unit that makes a map where marks indicating the plurality of spots are displayed on the basis of the position information set to the course information; and
a display control unit that sequentially sets the plurality of spots as display objects according to the order information set to the course information and causes a display unit to display the photos taken in the spots set as the display objects and a map of a predetermined range including the marks indicating the spots.

2. The information providing apparatus according to claim 1,
wherein the course information acquiring unit performs communication with a server managing a database in which a plurality of course information is registered, provides the plurality of course information registered in the database to a user, and acquires the course information selected by the user from the server.

3. The information providing apparatus according to claim 1 or 2,
wherein the photo acquiring unit performs communication with a server managing a database in which a plurality of photos to which position information of positions at which the photos are taken is added are registered, and acquires photos taken in a predetermined area including the spots on the basis of the position information set to the course information acquired by the course information acquiring unit.

4. The information providing apparatus according to any preceding claim, further comprising:
an output unit that outputs music associated with the spots set as the display objects by the display control unit.

5. The information providing apparatus according to claim 4,
wherein area information indicating areas to which the spots belong is set in the course information,
the information providing apparatus further comprises a music acquiring unit that performs communication with a server managing a database in which a plurality of music is registered and acquires the plurality of music associated with the area information set to the course information, and
the output unit outputs the music associated with the spots set as the display objects by the display control unit among the music acquired by the music acquiring unit.

6. The information providing apparatus according to any preceding claim,
wherein the course information acquiring unit performs communication with a server managing a database in which a plurality of photos to which position information of positions at which the photos are taken is added are registered for each of classifications, provides the classifications of the photos registered in the database to a user, and generates the course information on the basis of the position information added to the plurality of photos included in the classification selected by the user and an order of a time when each photo is taken.

7. The information providing apparatus according to any preceding claim,
wherein the course information acquiring unit causes the display unit to display a map to designate the spots and generates the course information on the basis of the position information of the plurality of spots designated by the user and an order of the spots designated by the user.

8. The information providing apparatus according to claim 7, further comprising:
a communication unit that allows the user to designate the plurality of spots and transmits the course information generated by the course information acquiring unit,
wherein the communication unit transmits the course information to a server managing a database in which a plurality of course information is registered to share the course information with other information providing apparatuses.

9. The information providing apparatus according to any preceding claim,
wherein the display control unit causes the display unit to display information associated with the spots set as the display objects and the photos.

10. An information providing method comprising:
acquiring course information to which position information indicating positions of a predetermined plurality of spots and order information indicating an order of each of the spots are set;
acquiring photos taken in a predetermined area including the spots;
making a map where marks indicating the plurality of spots are displayed on the basis of the position information set to the course information; and
sequentially setting the plurality of spots as display objects according to the order information set to the course information and causing a display unit to display the photos taken in the spots set as the display objects and a map of a predetermined range including the marks indicating the spots.

11. A program for causing a computer to execute an information providing process comprising:
acquiring course information to which position information indicating positions of a predetermined plurality of spots and order information indicating an order of each of the spots are set;
acquiring photos taken in a predetermined area including the spots;
making a map where marks indicating the plurality of spots are displayed on the basis of the position information set to the course information; and
sequentially setting the plurality of spots as display objects according to the order information set to the course information and causing a display unit to display the photos taken in the spots set as the display objects and a map of a predetermined range including the marks indicating the spots.
